# EUROPÄISCHE PATENTSCHRIFT

(11) **EP 3 970 265 B1**
(45) Veröffentlichungstag und Bekanntmachung des Hinweises auf die Patenterteilung: **08.10.2025**
(21) Anmeldenummer: 20721407.3
(22) Anmeldetag: 15.04.2020
(51) Int. Cl.: H02K 11/25, G01K 1/14

(54) **TEMPERATURMESSEINRICHTUNG FÜR EINEN STATOR EINER ELEKTRISCHEN MASCHINE MIT HAIRPIN- ODER STAB-WELLENWICKLUNGEN**
TEMPERATURE MEASURING APPARATUS FOR A STATOR OF AN ELECTRICAL MACHINE HAVING HAIRPIN WAVE WINDINGS OR BAR WAVE WINDINGS
DISPOSITIF DE MESURE DE TEMPÉRATURE POUR UN STATOR D'UNE MACHINE ÉLECTRIQUE COMPRENANT DES ENROULEMENTS ONDULÉS EN ÉPINGLE À CHEVEUX OU EN BARRE

(30) Priorität: 14.05.2019 DE 102019112516
(43) Veröffentlichungstag der Anmeldung: 23.03.2022
(73) Patentinhaber: Schaeffler Technologies AG & Co. KG, 91074 Herzogenaurach (DE)
(72) Erfinder: CZERLEWITZ, Mike, 77815 Bühl (DE); SILVERY, Christian, 75045 Walzbachtal (DE)
(86) Internationale Anmeldenummer: PCT/DE2020/100299
(87) Internationale Veröffentlichungsnummer: WO 2020/228883

(56) Entgegenhaltungen:
- EP-A1- 3 252 447
- WO-A1-2018/189813
- WO-A1-2019/063207
- WO-A1-2019/087568
- DE-A1- 102017 210 433
- JP-A- 2003 092 858
- JP-A- 2010 213 544
- JP-A- 2012 175 861
- JP-U- S5 587 170

## Beschreibung

Die Erfindung betrifft eine Temperaturmesseinrichtung für einen Stator einer elektrischen Maschine mit Hairpin- oder Stab-Wellenwicklungen, welche zur Messung der Temperatur des Stators dient. Ferner betrifft die Erfindung eine elektrische Maschine mit Hairpin- oder Stab-Wellenwicklungen.

Für die Entwicklung von elektrischen Maschinen, insbesondere von elektrischen Maschinen für elektrische Hybridfahrzeuge sowie für Elektrofahrzeugen oder für Radnabenantriebe, sind verschiedene Wicklungstechnologien für den Stator der elektrischen Maschinen bekannt.

So ist beispielsweise aus dem Stand der Technik eine Anordnung zur Temperaturerfassung einer Statorwicklung einer elektrischen Maschine gemäß DE 10 2013 201 835 A1 bekannt.

Bei dieser Anordnung ist ein Temperatursensor, welcher auf einer Lanze angeordnet ist, freitragend zwischen zwei Statorwicklungsabschnitte einschiebbar.

Der Temperatursensor ist dabei über ein Anschlussleiter-Ausrichtelement in einem Gehäuse der elektrischen Maschine angeordnet und ferner durch eine äußere Kunststoffhülle geschützt.

Eine derartige Ausbildung ist für eine besonders dichte bzw. kompakte Wicklung, wie die sogenannte Hairpin- oder Stab-Wellenwicklung, nicht geeignet, da die Zwischenräume zwischen einzelnen Wicklungsabschnitten sehr klein sind.

Anders ausgedrückt, gestaltet sich eine Temperaturerfassung bei derartigen Wicklungen (Hairpin- oder Stab-Wellenwicklung) schwierig, da diese sehr eng gewickelt oder bestückt sind, sodass ein herkömmlicher Temperatursensor zwischen die Wicklungen bzw. die jeweiligen Drähte nicht oder nur sehr schlecht und aufwändig gesteckt werden kann.

Eine Temperaturmesseinrichtung gemäß dem Oberbegriff des Anspruch 1 ist in der DE 102017210433 offenbart. Für weiteren Stand der Technik sei auf die EP 3252447 A1, WO 2019063207 A1, JP 2003092858 A, WO 2019087568 A1, JP 2012175861 A, JP 2010213544 A, WO 2018189813 A1 verwiesen.

Daher ist es Aufgabe der vorliegenden Erfindung, eine Temperaturmesseinrichtung für einen Stator einer elektrischen Maschine mit Hairpin- oder Stab-Wellenwicklungen und zum Messen der Temperatur des Stators sowie eine elektrische Maschine mit Hairpin- oder Stab-Wellenwicklungen anzugeben, welche eine kostengünstige und einfache sowie vorzugsweise dauerhafte und gleichbleibende thermische Anbindung eines Temperatursensors an einer Hairpin- oder Stab-Wellenwicklung eines Stators gewährleistet.

Ferner ist es Aufgabe der vorliegenden Erfindung, eine Temperaturmesseinrichtung sowie eine elektrische Maschine anzugeben, welche Fertigungs- und Materialtoleranzen sowie Bewegungen aufgrund von Vibrationen und Temperaturänderungen ausgleichen.

Diese Aufgaben werden erfindungsgemäß durch die Merkmale der unabhängigen Patentansprüche gelöst. Weitere vorteilhafte Weiterbildungen sind Gegenstand der Unteransprüche.

Erfindungsgemäß umfasst bei einem ersten Aspekt der vorliegenden Erfindung eine Temperaturmesseinrichtung für einen Stator einer elektrischen Maschine mit Hairpin-oder Stab-Wellenwicklungen und zum Messen der Temperatur des Stators:
- eine Sensorvorrichtung zum Messen der Temperatur des Stators, und
- eine Haltevorrichtung zum Halten der Sensorvorrichtung an einer Wicklung des Stators.

Weiter ist die Haltevorrichtung ausgebildet, mindestens eine Wicklung des Stators zu hintergreifen und an dieser einzurasten.

Erfindungsgemäß weist die Haltevorrichtung einen Aufnahmeteil für die Sensorvorrichtung und mindestens einen Rastteil zum Verrasten an mindestens einer Wicklung des Stators und/oder mindestens ein Positionierteil zum Positionieren der Temperaturmesseinrichtung an einer Wicklung auf.

Weiter erstreckt sich das mindestens eine Positionierteil in radialer Richtung vom Aufnahmeteil der Haltevorrichtung weg.

In einer Weiterbildung ist das mindestens eine Positionierteil quaderförmig ausgebildet.

Nochmals mit anderen Worten ausgedrückt, ist es bevorzugt, dass die Haltevorrichtung ausgebildet ist, die Sensorvorrichtung an einer Außenseite des hohlzylinderförmigen Stators gegen eine Wicklung bzw. gegen die Wicklungsgeometrie bzw. ein Isolationspapier zu drücken und an einer Innenseite an mindestens einer Wicklung des hohlzylinderförmigen Stators, insbesondere lösbar, einzurasten. Auf diese Weise kann eine kostengünstige, einfache sowie vorzugsweise dauerhafte und vor allem wieder lösbare Anbindung einer Sensorvorrichtung an einer Hairpin- oder Stab-Wellenwicklung eines Stators gewährleistet werden. Auch können dadurch Fertigungs- und Materialtoleranzen eines Stators sowie dessen Bewegungen im Betrieb der elektrischen Maschine aufgrund von Vibrationen und Temperaturänderungen ausgeglichen werden, da die Sensorvorrichtung nicht mehr im Inneren des Stators angeordnet wird, wie im Stand der Technik, sondern außerhalb. Somit kann also auch eine gleichbleibende thermische Anbindung der Sensorvorrichtung an einer Hairpin- oder Stabwellenwicklung gewährleistet werden.

Erfindungsgemäß ist das Aufnahmeteil in einer ersten Ebene und das mindestens eine Rastteil in einer zweiten Ebene ausgebildet und ausgerichtet.

Dabei kann vorgesehen sein, dass sich die erste und zweite Ebene schneiden, erfindungsgemäß sind sie senkrecht zueinander ausgerichtet.

Auch ist es von Vorteil, wenn die Haltevorrichtung ein erstes und ein zweites Ende in axialer Richtung aufweist.

Vorzugsweise ist am ersten Ende das mindestens eine Positionierteil angeordnet.

Des Weiteren ist es vorteilhaft, wenn am ersten Ende das mindestens eine Rastteil, insbesondere federnd, angeordnet ist. Auf diese Weise kann mithilfe der federnden Ausbildung eine Kraft erzeugt werden.

Vorteilhafterweise sind das mindestens eine Positionierteil und das mindestens eine Rastteil in Umfangsrichtung voneinander beabstandet.

Erfindungsgemäß weist das mindestens eine Rastteil ein erstes und ein zweites Ende in radialer Richtung auf, wobei das mindestens eine Rastteil mit seinem ersten Ende mit dem Aufnahmeteil der Haltevorrichtung, insbesondere einstückig, verbunden ist. Eine einstückige Ausbildung erleichtert den Herstellungs- und Montageaufwand und senkt die Kosten.

Ferner ist es erfindungsgemäß vorgesehen, dass sich das mindestens eine Rastteil in radialer Richtung vom Aufnahmeteil freitragend wegerstreckt.

Auch ist es erfindungsgemäß vorgesehen, dass das mindestens eine Rastteil an seinem zweiten Ende ein Rastteil, insbesondere einen Haken, zum Hintergreifen und Einrasten an einer Wicklung aufweist.

Erfindungsgemäß weist das mindestens eine Rastteil ein Federelement auf, das zwischen dem ersten und zweiten Ende des Rastteils angeordnet ist, um mit einer Federkraft die Sensorvorrichtung gegen eine Wicklung bzw. ein Isolationspapier zu drücken.

Auch ist es von Vorteil, wenn das Federelement einen Sigma-förmigen oder E-förmigen Verlauf aufweist, insbesondere in der zweiten Ebene. Das Federelement hat vorzugsweise in der zweiten Ebene die Aufgabe eine Kraft zu erzeugen, welche eine Verspannkraft erzeugt, um die Temperaturmesseinrichtung zu fixieren.

Zudem kann vorgesehen sein, dass die Haltevorrichtung zwei Rastteile umfasst, die in Umfangsrichtung voneinander beabstandet sind.

Bevorzugterweise ist das mindestens eine Positionierteil am ersten Ende der Haltevorrichtung angeordnet.

Auch ist es günstig, wenn das mindestens eine Positionierteil einstückig mit dem Aufnahmeteil verbunden ist.

Auch ist erfindungsgemäß vorgesehen, dass die Haltevorrichtung zwei Positionierteile umfasst, die in Umfangsrichtung voneinander beabstandet sind.

Ferner ist denkbar, dass die zwei Positionierteile derart zueinander beabstandet sind, dass dazwischen die Sensorvorrichtung anordenbar ist.

Des Weiteren ist es möglich, dass sich das mindestens eine Positionierteil und das mindestens eine Rastteil von dem Aufnahmeteil in dieselbe Richtung, insbesondere in derselben zweiten Ebene, erstrecken.

Vorteilhafterweise weist der Aufnahmeteil einen Aufnahmeabschnitt, insbesondere als Vertiefung ausgebildet, zur Aufnahme der Sensorvorrichtung auf.

Ferner ist es vorteilhaft, wenn sich der Aufnahmeabschnitt vom ersten zum zweiten Ende der Haltevorrichtung erstreckt.

Auch ist es von Vorteil, wenn die Temperaturmesseinrichtung ein Ausrichtelement umfasst, das im Aufnahmeabschnitt angeordnet ist und die Sensorvorrichtung an einer Wicklung des Stators ausrichtet.

Mit anderen Worten ausgedrückt, ist es bevorzugt, dass die Temperaturmesseinrichtung ein Ausrichtelement umfasst, das zwischen der Haltevorrichtung und der Sensorvorrichtung angeordnet ist, um eine Kraft auf die Sensorvorrichtung auszuüben, sodass die Sensorvorrichtung großflächig an eine Wicklung andrückbar ist.

Vorzugsweise erstreckt sich das Ausrichtelement entlang des Aufnahmeabschnitts.

Ferner kann vorgesehen sein, dass das Ausrichtelement aus einem Kunststoff, insbesondere aus einem, vorzugsweise weichen, Elastomerwerkstoff, gefertigt ist. Auf diese Weise kann eine gleichbleibende thermische Anbindung der Sensorvorrichtung an einer Hairpin- oder Stabwellenwicklung gewährleistet werden. Anders ausgebdrückt, ist das Ausrichtelement ausgebildet, sich so zu verformen, dass die Sensorvorrichtung stets bestmöglich an eine Hairpin- oder Stab-Wellenwicklung einer elektrischen Maschine angedrückt wird, um eine möglichst große Fläche der Sensorvorrichtung in Anlage an einer Wellenwicklung sicherzustellen.

Bevorzugterweise umfasst die Sensorvorrichtung einen Temperatursensor.

Auch ist es bevorzugt, dass die Sensorvorrichtung einen Kabelanschluss zur Verbindung eines Temperatursensors mit einer Auswerteeinheit umfasst.

Vorzugsweise ist der Kabelanschluss zumindest teilweise mit der Haltevorrichtung verbunden, insbesondere in dieser teilweise eingegossen.

Vorteilhafterweise weist die Sensorvorrichtung ein erstes und ein zweites Ende in axialer Richtung auf, wobei vorzugsweise am ersten Ende der Temperatursensor und am zweiten Ende der Kabelanschluss angeordnet sind.

Ferner ist es von Vorteil, wenn die Sensorvorrichtung eine Schutzeinrichtung, insbesondere eine PTFE Ummantelung beispielsweise in Form eines Schrumpfschlauches, umfasst, die den Temperatursensor, insbesondere vollständig, und zumindest teilweise den Kabelanschluss umhüllt.

Des Weiteren ist es vorteilhaft, wenn die Sensorvorrichtung an einen Aufnahmeabschnitt der Haltevorrichtung hinsichtlich Form und Größe angepasst ist. Selbstverständlich ist es auch möglich, dass der Aufnahmeabschnitt an die Geometrie der Sensorvorrichtung angepasst ist.

Abschließend sei noch angemerkt, dass es vorgesehen sein kann, dass die Temperaturmesseinrichtung aus einem Kunststoff gefertigt ist.

Ein zweiter Aspekt der vorliegenden Erfindung umfasst eine elektrische Maschine mit Hairpin- oder Stab-Wellenwicklungen.

Es wird ausdrücklich darauf hingewiesen, dass die Merkmale der Temperaturmesseinrichtung, wie sie unter dem ersten Aspekt erwähnt werden, einzeln oder miteinander kombinierbar bei der elektrischen Maschine Anwendung finden können.

Anders ausgedrückt, die oben unter dem ersten Aspekt der Erfindung genannten Merkmale betreffend die Temperaturmesseinrichtung können auch hier unter dem zweiten Aspekt der Erfindung mit weiteren Merkmalen kombiniert werden.

Bevorzugterweise umfasst eine elektrische Maschine mit Hairpin- oder Stab-Wellenwicklungen:
- einen hohlzylinderförmigen Stator, insbesondere hergestellt mit Hairpin- oder Stab-Wellenwicklungen, mit mindestens einer Wicklung, und
- eine Temperaturmesseinrichtung nach dem ersten Aspekt.

Ferner ist es bevorzugt, dass die Temperaturmesseinrichtung mit ihrer Sensorvorrichtung an einer ersten Wicklung angeordnet ist und zwei Rastteile an jeweils einer weiteren Wicklung eingerastet sind, um die Temperaturmesseinrichtung in Position am Stator zu halten.

Vorzugsweise weisen die Rastteile eine derartige Länge auf, dass sich diese von der äußeren Mantelfläche des Stators hin zu dessen inneren Mantelfläche erstrecken. Mit anderen Worten ausgedrückt ist es also von Vorteil, wenn sich die Rastteile durch die Wanddicke des hohlzylinderförmigen Stators erstrecken, wohingegen sich die Temperaturmesseinrichtung an der Außenseite bzw. an der äußeren Mantelfläche des Stators befindet.

Nachfolgend wird der oben dargestellte Erfindungsgedanke ergänzend mit anderen Worten ausgedrückt.

Dieser Gedanke besteht vorzugsweise - vereinfacht dargestellt - darin, einen Temperatursensor bzw. eine Sensorvorrichtung durch einen Clip bzw. eine Haltevorrichtung an einer Hairpin- oder Stab-Wellenwicklung eines Stators zu montieren.

Mittels eines Ausrichtelements, vorzugsweise ausgestaltet aus einem Elastomer, wird bevorzugterweise der radiale und tangentiale Ausgleich von Fertigungs- und Materialtoleranzen sowie der Ausgleich von Bewegungen aufgrund von Vibrationen und Temperaturänderungen kompensiert und eine dauerhafte und gleichbleibende thermische Anbindung gewährleistet. Ein derartiges Konzept zeichnet sich durch eine besonders einfache und sichere Herstellung aus.

Nachstehend wird die Erfindung anhand eines Ausführungsbeispiels in Verbindung mit zugehörigen Zeichnungen näher erläutert. Hierbei zeigen schematisch:
- **Fig. 1**: eine räumliche Ansicht auf eine erfindungsgemäße Temperaturmesseinrichtung für einen Stator einer elektrischen Maschine;
- **Fig. 2**: eine räumliche Ansicht auf eine Sensorvorrichtung aus Figur 1; und
- **Fig. 3 bis 6**: unterschiedliche Seitenansichten sowie unterschiedliche räumliche Ansichten auf einen Teilausschnitt einer elektrischen Maschine mit einer erfindungsgemäßen Temperaturmesseinrichtung aus Figur 1.

In der nachfolgenden Beschreibung werden gleiche Bezugszeichen für gleiche Gegenstände verwendet.

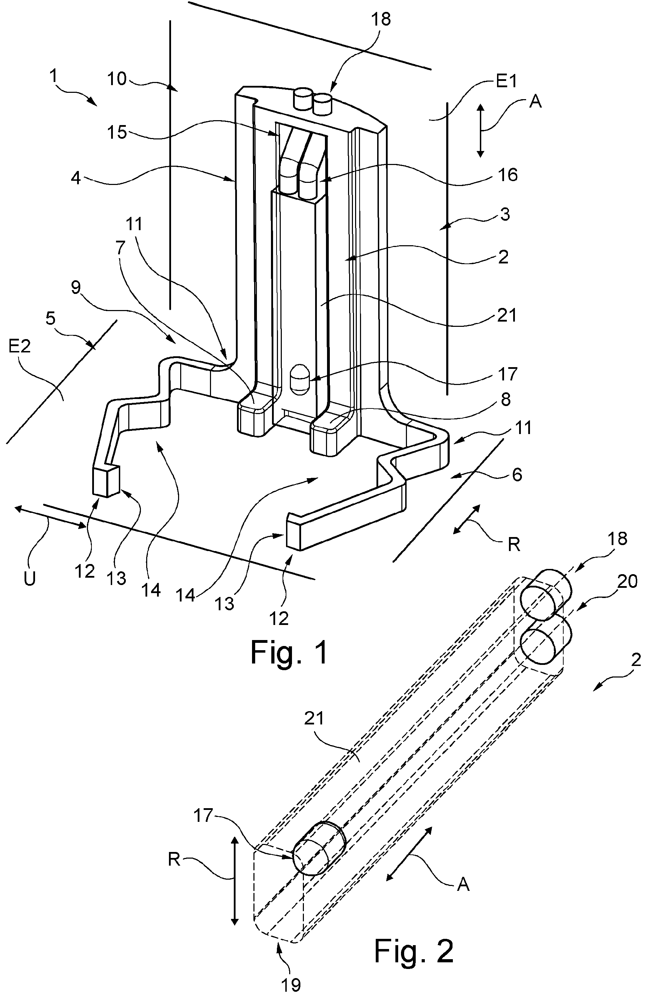

Figur 1 zeigt eine räumliche Ansicht auf eine erfindungsgemäße Temperaturmesseinrichtung 1 für einen Stator 31 einer elektrischen Maschine 30.

Genauer dargestellt zeigt Figur 1 eine Temperaturmesseinrichtung 1 für einen Stator 31 einer elektrischen Maschine 30 mit Hairpin- oder Stab-Wellenwicklungen 32, 33, 34 und zum Messen der Temperatur des Stators 31.

Hierbei hat die Temperaturmesseinrichtung 1 eine Sensorvorrichtung 2 zum Messen der Temperatur des Stators 31 und eine Haltevorrichtung 3 zum Halten der Sensorvorrichtung 2 an einer Wicklung 32 des Stators 31.

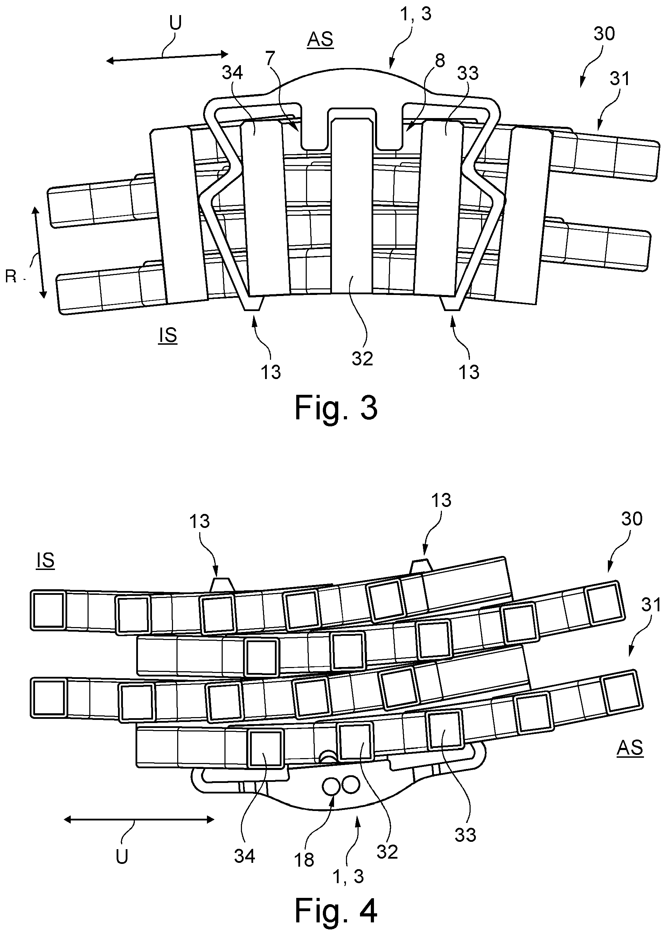

Die Haltevorrichtung 3 ist ausgebildet, zwei Wicklungen 33, 34 des Stators 31 zu hintergreifen und an diesen einzurasten (vgl. z. B. Figuren 3 bis 6).

Ferner zeigt Figur 1, dass die Haltevorrichtung 3 einen Aufnahmeteil 4 für die Sensorvorrichtung 2, zwei Rastteile 5, 6 zum Verrasten an einer Wicklung 32 des Stators 31 und zwei Positionierteile 7, 8 zum Positionieren der Temperaturmesseinrichtung 1 an einer Wicklung 32 aufweist.

Gemäß Figur 1 sind dabei das Aufnahmeteil 4 in einer ersten Ebene E1 und die zwei Rastteile 5, 6 in einer zweiten Ebene E2 ausgebildet und ausgerichtet, wobei die erste und zweite Ebene E1, E2 senkrecht zueinander ausgerichtet sind.

Die Haltevorrichtung 3 hat in axialer Richtung A ein erstes 9 und ein zweites Ende 10, wobei am ersten Ende 9 die zwei Positionierteile 7, 8 und die zwei Rastteile 5, 6 angeordnet sind.

Wie Figur 1 ferner zu entnehmen, sind die zwei Rastteile 5, 6 in Umfangsrichtung U voneinander beabstandet und haben jeweils ein erstes 11 und ein zweites Ende 12 in radialer Richtung R, wobei jedes Rastteile 5, 6 mit seinem ersten Ende 11 mit dem Aufnahmeteil 4 der Haltevorrichtung 3 einstückig verbunden ist.

Auch erstreckt sich jedes Rastteile 5, 6 in radialer Richtung R vom Aufnahmeteil 4 freitragend weg, wobei jedes Rastteile 5, 6 an seinem zweiten Ende 12 ein Rastelement 13, ausgebildet als Haken, zum Hintergreifen und Einrasten an einer Wicklung 33, 34 bzw. an einem Isolationspapier der elektrischen Maschine 30 hat (vgl. auch Figuren 3 bis 6).

Zwischen dem ersten 11 und zweiten Ende 12 des Rastteils 5, 6 ist ein Federelement 14 angeordnet ist, um mit einer Federkraft die Sensorvorrichtung 2 gegen eine Wicklung 32 zu drücken.

Das Federelement 14 hat, insbesondere in der zweiten Ebene E2, einen Sigma-förmigen oder E-förmigen Verlauf. Dieser Verlauf kann je nach Auslegung des Federelementes 14 unterschiedlich aussehen.

Auch geht aus Figur 1 hervor, dass jedes Positionierteile 7, 8 am ersten Ende 9 der Haltevorrichtung 3 angeordnet ist, wobei sich jedes Positionierteile 7, 8 in radialer Richtung R vom Aufnahmeteil 4 der Haltevorrichtung 3 wegerstreckt.

So erstrecken sich also die Positionierteile 7, 8 und die Rastteile 5, 6 von dem Aufnahmeteil 4 in dieselbe Richtung.

Ferner sind die Positionierteile 7, 8 quaderförmig ausgebildet und einstückig mit dem Aufnahmeteil 4 verbunden.

Des Weiteren sind die zwei Positionierteile 7, 8 der Haltevorrichtung 3 in Umfangsrichtung U voneinander beabstandet, und zwar derart zueinander bzw. voneinander beabstandet, dass dazwischen die Sensorvorrichtung 2 angeordnet ist.

Wie ebenfalls Figur 1 offenbart, hat der Aufnahmeteil 4 einen Aufnahmeabschnitt 15, insbesondere als Vertiefung ausgebildet, zur Aufnahme der Sensorvorrichtung 2.

Der Aufnahmeabschnitt 15 erstreckt sich vom ersten 9 zum zweiten Ende 10 der Haltevorrichtung 3.

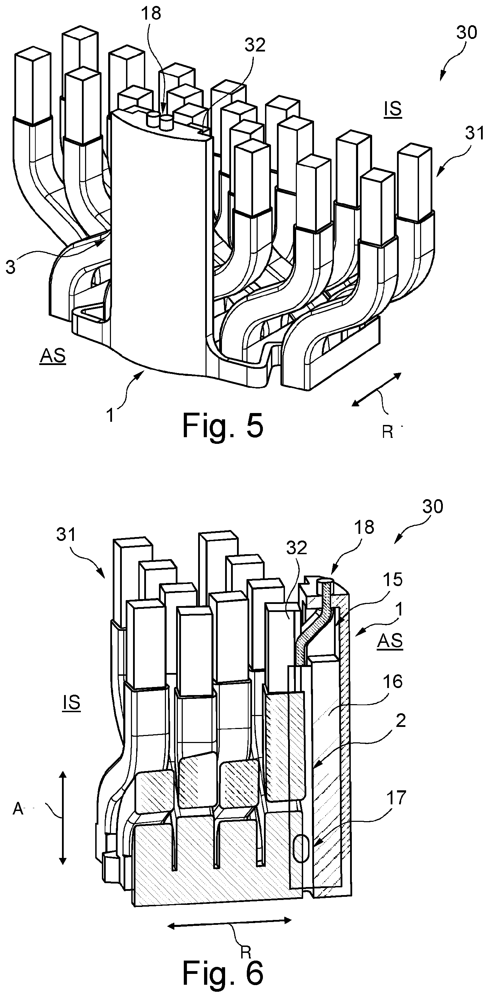

Ferner ist in Figur 1 oder besser in Figur 6 zu erkennen, dass die Temperaturmesseinrichtung 1 ein Ausrichtelement 16 umfasst, das im Aufnahmeabschnitt 15 angeordnet ist und die Sensorvorrichtung 2 an einer Wicklung 32 des Stators 31 ausrichten kann.

So hat die Temperaturmesseinrichtung 1 also ein Ausrichtelement 16 zwischen der Haltevorrichtung 3 und der Sensorvorrichtung 2, um eine Kraft auf die Sensorvorrichtung 2 auszuüben, sodass diese großflächig an eine Wicklung 32 andrückbar ist (vergleiche in diesem Zusammenhang beispielsweise Figuren 3 bis 6).

Das Ausrichtelement 16 erstreckt sich entlang des Aufnahmeabschnitts 15 und ist aus einem Elastomerwerkstoff gefertigt.

Figur 2 zeigt eine räumliche Ansicht auf die Sensorvorrichtung 2 aus Figur 1.

Hierbei hat die Sensorvorrichtung 2 einen Temperatursensor 17 und einen Kabelanschluss 18 zur Verbindung des Temperatursensors 17 mit einer Auswerteeinheit. Diese Verbindung zwischen Temperatursensor 17 und Kabelanschluss 18 erfolgt vorzugsweise mittels herkömmlicher Verbindungstechnik, beispielsweise mittels Schweißens oder Crimpens des Temperatursensors 17 und des erforderlichen Kabelanschlusses 18.

Bei dem Temperatursensor 17 kann es sich um ein NTC- oder PTC-Widerstandselement handeln.

Der Kabelanschluss 18 ist teilweise mit der Haltevorrichtung 3 verbunden bzw. in dieser teilweise eingegossen (vergleiche Figur 1 zweites Ende 10 der Haltevorrichtung 3).

Auch die Sensorvorrichtung 2 hat ein erstes 19 und ein zweites Ende 20 in axialer Richtung A, wobei am ersten Ende 19 der Temperatursensor 17 und am zweiten Ende 20 der Kabelanschluss 18 angeordnet sind.

Des Weiteren hat die Sensorvorrichtung 2 eine Schutzeinrichtung 21, insbesondere eine PTFE Ummantelung beispielsweise in Form eines Schrumpfschlauches, die den Temperatursensor 17 vollständig und teilweise den Kabelanschluss 18 umhüllt.

Damit die Sensorvorrichtung 2 in dem Aufnahmeabschnitt 15 der Haltevorrichtung 3 angeordnet werden kann, ist diese hinsichtlich Form und Größe an den Aufnahmeabschnitt 15 angepasst. Selbstverständlich ist es auch möglich, dass der Aufnahmeabschnitt 15 an die Geometrie der Sensorvorrichtung 2 angepasst ist.

Abschließend sei zu Figur 1 noch angemerkt, dass die Temperaturmesseinrichtung 1 aus einem Kunststoff gefertigt ist.

Figuren 3 bis 6 zeigen jeweils unterschiedliche Seitenansichten sowie unterschiedliche räumliche Ansichten auf einen Teilausschnitt einer elektrischen Maschine 30 mit einer erfindungsgemäßen Temperaturmesseinrichtung 1 aus Figur 1.

Genau genommen zeigen die Figuren 3 bis 6 eine elektrische Maschine 30 mit Hairpin- oder Stab-Wellenwicklungen.

Die elektrische Maschine 30 hat einen hohlzylinderförmigen Stator 31, hergestellt mit Hairpin- oder Stab-Wellenwicklungen 32, 33, 34, mit mehreren, insbesondere drei Wicklungen 32, 33, 34.

Hierbei ist die Temperaturmesseinrichtung 1 aus den Figuren 1 und 2 an dem Stator 31 angeordnet.

Von weiteren Ausführungen betreffend die Temperaturmesseinrichtung 1 wird an dieser Stelle abgesehen und auf die obigen Ausführungen zu den Figuren 1 und 2 verwiesen, die hier analog anwendbar sind.

Wie bereits zu Figur 1 ausgeführt, hat die Temperaturmesseinrichtung 1 eine Sensorvorrichtung 2 zum Messen der Temperatur des Stators 31 und eine Haltevorrichtung 3 zum Halten der Sensorvorrichtung 2 an einer Wicklung 32 des Stators 31.

Nochmals mit anderen Worten ausgedrückt, ist die Haltevorrichtung 3 ausgebildet, die Sensorvorrichtung 2 an einer Außenseite AS des hohlzylinderförmigen Stators 31 gegen eine Wicklung 32 zu drücken und an einer Innenseite IS an mehreren Wicklung 33, 34 des hohlzylinderförmigen Stators 31 lösbar einzurasten.

Wie insbesondere den Figuren 3 und 4 zu entnehmen, ist die Temperaturmesseinrichtung 1 mit ihrer Sensorvorrichtung 2 an einer ersten Wicklung 32 angeordnet, wobei zwei Rastteile 5, 6 an jeweils einer weiteren Wicklung 33, 34 eingerastet sind, um die Temperaturmesseinrichtung 1 in Position am Stator 31 zu halten.

Dabei haben die Rastteile 5, 6 eine derartige Länge, dass sich diese von der äußeren Mantelfläche AS des Stators 31 hin zu dessen inneren Mantelfläche IS erstrecken, wodurch die Rastelemente 13 an den Wicklung 33, 34 eingerastet sind.

Nachfolgend werden die vorgestellten Figuren 1 bis 6 nochmals mit anderen Worten beschrieben.

Hierbei ist vorzugsweise der Grundgedanke der erfinderischen Lösung in Figur 3 dargestellt.

In dieser wird die Sensorvorrichtung 2 von einem Clip bzw. von der Haltevorrichtung 3, welche in eine Hairpin- oder Stab-Wellenwicklung verrastet wird und sich durch ein weiches Element bzw. das Ausrichterelement 16, z. B. ein Elastomer, an die äußere Geometrie der Wicklung 32 gleichmäßig andrückt.

Der Aufbau der erfinderischen Lösung ist zum Beispiel in Figur 1 dargestellt.

Die Anschlüsse bzw. der Kabelanschluss 18 der Sensorvorrichtung 3 werden vorzugsweise mittels Verbindungstechnik (z.B. Schweiß-, Crimp-Prozess etc.) an Signalleitungen bzw. Kabeln angebunden.

Der Clip bzw. die Temperaturmesseinrichtung 1 ist kann ein Kunststoffspritzteil sein, welcher an die Geometrie der Wicklung angelehnt ist. Dieser Clip 1 hat zusätzlich in dem Aufnahmeabschnitt 15 der Haltevorrichtung 3, siehe Figur 6, ein Elastomer bzw. ein Ausrichtelement 16, welches die Aufgabe hat radiale Toleranzen auszugleichen und den Temperatursensor 17 bzw. die gesamte Sensorvorrichtung 2 an eine Wicklung zu drücken.

Dieses Ausrichtelement 16 wird entweder nachträglich positioniert oder wird bereits von vornherein mit der Haltevorrichtung 3 hergestellt.

Das Elastomer bzw. das Ausrichtelement 16, welches sich zwischen der Temperaturmesseinrichtung 1 und der Sensorvorrichtung 2 befindet, verbessert den radialen Toleranzausgleich, indem der Temperatursensor 17 bzw. die Sensorvorrichtung 2 an die Wicklung und gegen das Ausrichtelement 16 angedrückt wird.

Das Material des Ausrichtelements 16 ist vorzugsweise so zu wählen, dass dieses sich durch wenig Druck verpressen lässt und wieder beim Entfernen der Temperaturmesseinrichtung 1 in Ausgangsposition geht, um später neu positioniert zu werden.

Zur Montage der Temperaturmesseinrichtung 1 an die Geometrie der Hairpin- oder Stab-Wellenwicklung 32 dienen zusätzliche Stege bzw. Positionierteile 7, 8 zur Führung und Winkelorientierung.

Wenn die endmontierte Temperaturmesseinrichtung 1 an die Hairpin- oder Stab-Wellenwicklung 32 gedrückt wird, siehe Figuren 3 bis 6, erfolgt ein äußerer Krafteinfluss radial nach außen.

Nun haben die Positionierteile 7, 8 vorzugsweise die Aufgabe die Temperaturmesseinrichtung 1 durch die Hairpins zu führen, bis diese auf Endposition, durch die Fixierungshaken bzw. Rastelemente 13, verrastet.

Bis dies geschieht, drückt die Sensorvorrichtung 3 gegen das weiche Elastomer bzw. gegen das Ausrichtelement 16. Somit stellt sich bei Endposition der Temperaturmesseinrichtung 1 eine optimale Anbindung von Temperatursensor 17 bzw. Sensorvorrichtung 2 und Hairpin- oder Stab-Wellenwicklung 32 ein.

**Bezugszeichenliste**

| | | | |
|---|---|---|---|
| 1 | Temperaturmesseinrichtung | 20 | zweites Ende der Sensorvorrichtung |
| 2 | Sensorvorrichtung | | |
| 3 | Haltevorrichtung | 21 | Schutzeinrichtung |
| 4 | Aufnahmeteil | | |
| 5 | Rastteil | 30 | elektrischen Maschine |
| 6 | Rastteil | 31 | Stator |
| 7 | Positionierteil | 32 | Wicklung |
| 8 | Positionierteil | 33 | Wicklung |
| 9 | erstes Ende der Haltevorrichtung | 34 | Wicklung |
| 10 | zweites Ende der Haltevorrichtung | A | axiale Richtung |
| 11 | erstes Ende des Rastteils | R | radiale Richtung |
| 12 | zweites Ende des Rastteils | U | Umfangsrichtung |
| 13 | Rastelement | | |
| 14 | Federelement | E1 | ersten Ebene |
| 15 | Aufnahmeabschnitt | E2 | zweite Ebene |
| 16 | Ausrichtelement | | |
| 17 | Temperatursensor | AS | Außenseite |
| 18 | Kabelanschluss | IS | Innenseite |
| 19 | erstes Ende der Sensorvorrichtung | | |

## Patentansprüche

1. Temperaturmesseinrichtung (1) für einen Stator (31) einer elektrischen Maschine (30) mit Hairpin- oder Stab-Wellenwicklungen (32, 33, 34) und zum Messen der Temperatur des Stators (31) aufweisend:
- eine Sensorvorrichtung (2) zum Messen der Temperatur des Stators (31),
- eine Haltevorrichtung (3) zum Halten der Sensorvorrichtung (2) an einer Wicklung (32) des Stators (31),
- wobei die Haltevorrichtung (3) ausgebildet ist, mindestens eine Wicklung (33, 34) des Stators (31) zu hintergreifen und an dieser einzurasten
- wobei die Haltevorrichtung (3)
• einen Aufnahmeteil (4) für die Sensorvorrichtung (2) und
• mindestens einen Rastteil (5, 6) zum Verrasten an mindestens einer Wicklung (32) des Stators (31) und
• mindestens ein Positionierteil (7, 8) zum Positionieren der Temperaturmesseinrichtung (1) an einer Wicklung (32) aufweist
- **dadurch gekennzeichnet, dass**
- das Aufnahmeteil (4) in einer ersten Ebene (E1) und das mindestens eine Rastteil (5, 6) in einer zweiten Ebene (E2) ausgebildet und ausgerichtet ist,
- wobei die erste und zweite Ebene (E1, E2) senkrecht zueinander ausgerichtet sind,
- wobei, wenn die Temperaturmesseinrichtung (1) auf dem Stator (31) angeordnet ist, das mindestens eine Rastteil (5, 6)
• ein erstes (11) und ein zweites Ende (12) in radialer Richtung (R) aufweist,
• mit seinem ersten Ende (11) mit dem Aufnahmeteil (4) der Haltevorrichtung (3) verbunden ist,
• sich in radialer Richtung (R) vom Aufnahmeteil (4) freitragend wegerstreckt,
• an seinem zweiten Ende (12) ein Rastelement (13), insbesondere einen Haken, zum Hintergreifen und Einrasten an einer Wicklung (32) aufweist,
• ein Federelement (14) aufweist, das zwischen dem ersten (11) und zweiten Ende (12) des Rastteils (5, 6) angeordnet ist, um mit einer Federkraft die Sensorvorrichtung (2) gegen eine Wicklung (32) zu drücken,
- sich das mindestens eine Positionierteil (7, 8) in dieselbe radiale Richtung (R) vom Aufnahmeteil (4) der Haltevorrichtung (3) wegerstreckt wie das Rastteil, und
- die Haltevorrichtung (3) zwei Positionierteile (7, 8) umfasst, die in Umfangsrichtung voneinander beabstandet sind, wenn sie auf einem Stator (31) angeordnet sind.

2. Temperaturmesseinrichtung nach Anspruch 1,
- wobei die Haltevorrichtung (3) ausgebildet ist, die Sensorvorrichtung (2) an einer Außenseite (AS) des hohlzylinderförmigen Stators (31) gegen eine Wicklung (32) zu drücken und an einer Innenseite (IS) an mindestens einer Wicklung (33, 34) des hohlzylinderförmigen Stators (31), insbesondere lösbar, einzurasten.

3. Temperaturmesseinrichtung nach Anspruch 1,
- wobei sich die erste und zweite Ebene (E1, E2) schneiden,.

4. Temperaturmesseinrichtung nach Anspruch 1,
- wobei die Haltevorrichtung (3) ein erstes (9) und ein zweites Ende (10) in axialer Richtung (A) aufweist,
- wobei vorzugsweise am ersten Ende (9) das mindestens eine Rastteil (5, 6), insbesondere federnd, angeordnet ist,
- wobei vorzugsweise am ersten Ende (9) die zwei Positionierteile (7, 8) angeordnet sind.

5. Temperaturmesseinrichtung nach einem der vorangehenden Ansprüche
- wobei die zwei Positionierteile (7, 8) quaderförmig ausgebildet sind.

6. Temperaturmesseinrichtung nach einem der vorangehenden Ansprüche,
- wobei die zwei Positionierteile (7, 8) am ersten Ende (9) der Haltevorrichtung (3) angeordnet sind,
- wobei vorzugsweise die zwei Positionierteile (7, 8) einstückig mit dem Aufnahmeteil (4) verbunden sind.

7. Temperaturmesseinrichtung nach einem der vorangehenden Ansprüche,
- wobei der Aufnahmeteil (4) einen Aufnahmeabschnitt (15), insbesondere als Vertiefung ausgebildet, zur Aufnahme der Sensorvorrichtung (2) aufweist,
- wobei sich vorzugsweise der Aufnahmeabschnitt (15) vom ersten (9) zum zweiten Ende (10) der Haltevorrichtung (3) erstreckt,
- wobei vorzugsweise die Temperaturmesseinrichtung (1) ein Ausrichtelement (16) umfasst, das im Aufnahmeabschnitt (15) angeordnet ist und die Sensorvorrichtung (2) an einer Wicklung (32) des Stators (31) ausrichtet,
- wobei vorzugsweise das Ausrichtelement (16) aus einem Kunststoff, insbesondere aus einem Elastomerwerkstoff, gefertigt ist.

8. Temperaturmesseinrichtung nach einem der vorangehenden Ansprüche,
- wobei die Sensorvorrichtung (2) einen Temperatursensor (17) umfasst,
- wobei vorzugsweise die Sensorvorrichtung (2) einen Kabelanschluss (18) zur Verbindung eines Temperatursensors (17) mit einer Auswerteeinheit umfasst,
- wobei vorzugsweise der Kabelanschluss (18) zumindest teilweise mit der Haltevorrichtung (3) verbunden ist, insbesondere in dieser teilweise eingegossen ist,
- wobei vorzugsweise die Sensorvorrichtung (2) eine Schutzeinrichtung (21), insbesondere eine PTFE Ummantelung beispielsweise in Form eines Schrumpfschlauches, umfasst, die den Temperatursensor (17), insbesondere vollständig, und zumindest teilweise den Kabelanschluss (18) umhüllt.

9. Elektrische Maschine (30) mit Hairpin- oder Stab-Wellenwicklungen aufweisend:
- einen hohlzylinderförmigen Stator (31), insbesondere hergestellt mit Hairpin-oder Stab-Wellenwicklungen (32, 33, 34), mit mindestens einer Wicklung (32, 33, 34),
- eine Temperaturmesseinrichtung (1) nach einem der vorangehenden Ansprüche.

10. Elektrische Maschine nach Anspruch 9,
- wobei die Temperaturmesseinrichtung (1) mit ihrer Sensorvorrichtung (2) an einer ersten Wicklung (32) angeordnet ist und zwei Rastteile (5, 6) an jeweils einer weiteren Wicklung (33, 34) eingerastet sind, um die Temperaturmesseinrichtung (1) in Position am Stator (31) zu halten,
- wobei vorzugsweise die Rastteile (5, 6) eine derartige Länge aufweisen, dass sich diese von der äußeren Mantelfläche (AS) des Stators (31) hin zu dessen inneren Mantelfläche (IS) erstrecken.

## Claims

1. A temperature measuring apparatus (1) for a stator (31) of an electrical machine (30) having hairpin wave windings or bar wave windings (32, 33, 34) and for measuring the temperature of the stator (31), having:
- a sensor apparatus (2) for measuring the temperature of the stator (31),
- a holding device (3) for holding the sensor apparatus (2) on a winding (32) of the stator (31),
- wherein the holding device (3) is designed to engage behind at least one winding (33, 34) of the stator (31) and to latch thereon,
- wherein the holding device (3) has
• a receiving part (4) for the sensor apparatus (2)
and
• at least one latching part (5, 6) for latching onto at least one winding (32) of the stator (31)
and
• at least one positioning part (7, 8) for positioning the temperature measuring apparatus (1) on a winding (32),
- **characterised in that**
- the receiving part (4) is formed and aligned in a first plane (E1) and the at least one latching part (5, 6) is formed and aligned in a second plane (E2),
- wherein the first and second planes (E1, E2) are aligned perpendicular to each other,
- wherein, when the temperature measuring apparatus (1) is arranged on the stator (31), the at least one latching part (5, 6)
• has a first (11) and a second end (12) in the radial direction (R),
• is connected with its first end (11) to the receiving part (4) of the holding device (3),
• extends in the radial direction (R) from the receiving part (4) in a cantilevered manner,
• has at its second end (12) a latching element (13), in particular a hook, for engaging behind and latching onto a winding (32),
• has a spring element (14) arranged between the first (11) and second end (12) of the latching part (5, 6) in order to press the sensor apparatus (2) against a winding (32) with a spring force,
- the at least one positioning part (7, 8) extends from the receiving part (4) of the holding device (3) in the same radial direction (R) as the latching part, and
- the holding device (3) comprises two positioning parts (7, 8) that are spaced apart from one another in the circumferential direction when arranged on a stator (31).

2. The temperature measuring apparatus according to claim 1,
- wherein the holding device (3) is configured to press the sensor apparatus (2) against a winding (32) on an outer side (AS) of the hollow-cylindrical stator (31) and to latch it, in particular releasably, onto at least one winding (33, 34) on an inner side (IS) of the hollow cylindrical stator (31).

3. The temperature measuring apparatus according to claim 1,
- wherein the first and second planes (E1, E2) intersect.

4. The temperature measuring apparatus according to claim 1,
- wherein the holding device (3) has a first (9) and a second end (10) in the axial direction (A),
- wherein preferably at the first end (9), the at least one latching part (5, 6) is arranged, in particular in a resilient manner,
- wherein the two positioning parts (7, 8) are preferably arranged at the first end (9).

5. The temperature measuring apparatus according to one of the preceding claims,
- wherein the two positioning parts (7, 8) are cuboid-shaped.

6. The temperature measuring apparatus according to one of the preceding claims,
- wherein the two positioning parts (7, 8) are arranged at the first end (9) of the holding device (3),
- wherein preferably the two positioning parts (7, 8) are integrally connected to the receiving part (4).

7. The temperature measuring apparatus according to one of the preceding claims,
- wherein the receiving part (4) has a receiving section (15), in particular designed as a recess, for receiving the sensor apparatus (2),
- wherein the receiving section (15) preferably extends from the first (9) to the second end (10) of the holding device (3),
- wherein preferably the temperature measuring apparatus (1) comprises an alignment element (16), which is arranged in the receiving section (15) and aligns the sensor apparatus (2) with respect to a winding (32) of the stator (31),
- wherein the alignment element (16) is preferably made of a plastic, in particular of an elastomer material.

8. The temperature measuring apparatus according to one of the preceding claims,
- wherein the sensor apparatus (2) comprises a temperature sensor (17),
- wherein the sensor apparatus (2) preferably comprises a cable connection (18) for connecting a temperature sensor (17) to an evaluation unit,
- wherein preferably the cable connection (18) is at least partially connected to the holding device (3), in particular partially embedded therein,
- wherein the sensor apparatus (2) preferably comprises a protective device (21), in particular a PTFE sheath, for example in the form of a shrink tube, which, in particular completely, surrounds the temperature sensor (17) and at least partially surrounds the cable connection (18).

9. An electrical machine (30) having hairpin wave windings or rod wave windings having:
- a hollow-cylindrical stator (31), in particular manufactured with hairpin wave windings or bar wave windings (32, 33, 34), having at least one winding (32, 33, 34),
- a temperature measuring apparatus (1) according to one of the preceding claims.

10. The electrical machine according to claim 9,
- wherein the temperature measuring apparatus (1) with its sensor apparatus (2) is arranged on a first winding (32) and two latching parts (5, 6) are each latched onto a further winding (33, 34) in order to hold the temperature measuring apparatus (1) in position on the stator (31),
- wherein the latching parts (5, 6) preferably have a length such that they extend from the outer lateral surface (AS) of the stator (31) to its inner surface (IS).

## Revendications

1. Dispositif de mesure de température (1) pour un stator (31) d'une machine électrique (30) comprenant des enroulements ondulés en épingle à cheveux ou à barre (32, 33, 34) et pour mesurer la température du stator (31), présentant :
- un dispositif capteur (2) pour mesurer la température du stator (31),
- un dispositif de maintien (3) pour maintenir le dispositif capteur (2) sur un enroulement (32) du stator (31),
- le dispositif de maintien (3) étant conçu pour venir en prise derrière au moins un enroulement (33, 34) du stator (31) et pour s'encliqueter sur celui-ci
- le dispositif de maintien (3) présentant
• une partie de réception (4) pour le dispositif capteur (2)
et
• au moins une partie d'encliquetage (5, 6) pour l'encliquetage d'au moins un enroulement (32) du stator (31)
et
• au moins une partie de positionnement (7, 8) pour positionner le dispositif de mesure de température (1) sur un enroulement (32)
- **caractérisé en ce que**
- la partie de réception (4) est formée et alignée dans un premier plan (E1) et l'au moins une partie d'encliquetage (5, 6) est formée et alignée dans un second plan (E2),
- les premier et second plans (E1, E2) étant alignés perpendiculairement l'un à l'autre,
- lorsque le dispositif de mesure de température (1) est disposé sur le stator (31), l'au moins une parties d'encliquetage (5, 6)
• présentant une première extrémité (11) et une seconde extrémité (12) dans la direction radiale (R),
• étant reliée par sa première extrémité (11) à la partie de réception (4) du dispositif de maintien (3),
• s'étendant en porte-à-faux dans la direction radiale (R) à partir de la partie de réception (4),
• au niveau de sa seconde extrémité (12), présentant un élément d'encliquetage (13), en particulier un crochet, destiné à venir en prise par derrière et à s'encliqueter sur un enroulement (32),
• présentant un élément ressort (14) qui est disposé entre la première (11) et la seconde extrémité (12) de la partie d'encliquetage (5, 6) afin de presser le dispositif capteur (2) contre un enroulement (32) avec une force élastique,
- l'au moins une partie de positionnement (7, 8) s'étendant dans la même direction radiale (R) à partir de la partie de réception (4) du dispositif de maintien (3) que la partie d'encliquetage, et
- le dispositif de maintien (3) comprenant deux parties de positionnement (7, 8) qui sont espacées l'une de l'autre dans la direction circonférentielle lorsqu'elles sont disposées sur un stator (31).

2. Dispositif de mesure de température selon la revendication 1,
- dans lequel le dispositif de maintien (3) est conçu pour presser le dispositif capteur (2) contre un enroulement (32) sur un côté extérieur (AS) du stator (31) cylindrique creux et pour venir s'encliqueter, en particulier de manière amovible, sur un côté intérieur (IS) sur au moins un enroulement (33, 34) du stator (31) cylindrique creux.

3. Dispositif de mesure de température selon la revendication 1,
- dans lequel les premier et second plans (E1, E2) se coupent.

4. Dispositif de mesure de température selon la revendication 1,
- dans lequel le dispositif de maintien (3) présente une première extrémité (9) et une seconde extrémité (10) dans la direction axiale (A),
- l'au moins une partie d'encliquetage (5, 6) étant de préférence agencée sur la première extrémité (9), en particulier de manière élastique,
- les deux parties de positionnement (7, 8) étant de préférence disposées sur la première extrémité (9).

5. Dispositif de mesure de température selon l'une quelconque des revendications précédentes
- les deux parties de positionnement (7, 8) étant de forme parallélépipédique.

6. Dispositif de mesure de température selon l'une quelconque des revendications précédentes,
- les deux parties de positionnement (7, 8) étant disposées sur la première extrémité (9) du dispositif de maintien (3),
- les deux parties de positionnement (7, 8) étant de préférence reliées d'un seul tenant à la partie de réception (4).

7. Dispositif de mesure de température selon l'une quelconque des revendications précédentes,
- la partie de réception (4) présentant une section de réception (15), en particulier conçue comme un évidement, pour recevoir le dispositif capteur (2),
- la section de réception (15) s'étendant de préférence de la première extrémité (9) à la seconde extrémité (10) du dispositif de maintien (3),
- le dispositif de mesure de température (1) comprenant de préférence un élément d'alignement (16) qui est disposé dans la section de réception (15) et qui aligne le dispositif de capteur (2) sur un enroulement (32) du stator (31),
- l'élément d'alignement (16) étant de préférence réalisé en matière plastique, en particulier en matériau élastomère.

8. Dispositif de mesure de température selon l'une quelconque des revendications précédentes,
- le dispositif capteur (2) comprenant un capteur de température (17) ,
- le dispositif capteur (2) comprenant de préférence une connexion par câble (18) pour relier un capteur de température (17) à une unité d'évaluation,
- la connexion par câble (18) étant de préférence au moins partiellement reliée au dispositif de maintien (3), en particulier partiellement moulée dans celui-ci,
- le dispositif de capteur (2) comprenant de préférence un dispositif de protection (21), en particulier une gaine en PTFE, par exemple sous la forme d'un tube rétractable, qui entoure le capteur de température (17), en particulier complètement, et au moins partiellement la connexion par câble (18).

9. Machine électrique (30) à enroulements ondulés en épingle à cheveux ou à barre présentant :
- un stator (31) cylindrique creux, fabriqué en particulier avec des enroulements ondulés en épingle à cheveux ou à barre (32, 33, 34), avec au moins un enroulement (32, 33, 34),
- un dispositif de mesure de température (1) selon l'une quelconque des revendications précédentes.

10. Machine électrique selon la revendication 9,
- le dispositif de mesure de température (1) étant disposé avec son dispositif capteur (2) sur un premier enroulement (32) et deux parties d'encliquetage (5, 6) étant encliquetées chacune sur un autre enroulement (33, 34) afin de maintenir le dispositif de mesure de température (1) en position sur le stator (31),
- les parties d'encliquetage (5, 6) présentant de préférence une longueur telle qu'elles s'étendent de la surface d'enveloppe extérieure (AS) du stator (31) à sa surface d'enveloppe intérieure (IS).
